# EUROPÄISCHE PATENTSCHRIFT

(11) **EP 4 019 395 B1**
(45) Veröffentlichungstag und Bekanntmachung des Hinweises auf die Patenterteilung: **17.04.2024**
(21) Anmeldenummer: 21215139.3
(22) Anmeldetag: 16.12.2021
(51) Int. Cl.: B64C 1/06, B64C 39/10, B64D 13/06

(54) **FLUGZEUGSTRUKTUR**
AIRCRAFT STRUCTURE
STRUCTURE D'AVION

(30) Priorität: 23.12.2020 DE 102020134902
(43) Veröffentlichungstag der Anmeldung: 29.06.2022
(73) Patentinhaber: Airbus Operations GmbH, 21129 Hamburg (DE); Airbus Operations S.A.S., 31060 Toulouse (FR)
(72) Erfinder: Rosebrock, Sven, 21129 Hamburg (DE); Schwickert, Jörg, 21129 Hamburg (DE); Lieven, Patrick, 31060 Toulouse Cedex 9 (FR); Mons, Bernward, 21129 Hamburg (DE); Everth, Henning, 21129 Hamburg (DE)
(74) Vertreter: Bird & Bird LLP - Hamburg

(56) Entgegenhaltungen:
- EP-A1- 3 378 788
- EP-A1- 3 546 362
- US-A- 3 405 893
- US-A1- 2012 248 244
- US-A1- 2017 297 291
- US-B1- 8 191 820

## Beschreibung

Die vorliegende Erfindung betrifft eine Flugzeugstruktur, insbesondere für ein Flugzeug mit einem Innenraum großer Breite, wie beispielsweise einem Nurflügler oder Nurflügler-ähnlichen Flugzeug. Ein weiterer Aspekt der Erfindung betrifft ein Flugzeug mit einer solchen Flugzeugstruktur.

Die Flugzeugstruktur erstreckt sich entlang bzw. parallel zu einer Längsachse, vorzugsweise von einer Nase bis zu einem Heck, einer Querachse, vorzugsweise zwischen zwei gegenüberliegenden Flügelspitzen, und einer Hochachse, vorzugsweise zwischen einer Oberseite und einer Unterseite. Die Flugzeugstruktur umfasst eine Oberschale im Bereich der Oberseite und eine Unterschale im Bereich der Unterseite, die gemeinsam, d.h. von oben durch die Oberschale und von unten durch die Unterschale, einen Innenraum umgeben, der zur Aufnahme einer Flugzeugkabine ausgebildet ist. Die Flugzeugstruktur umfasst ferner eine Säulenanordnung mit mindestens einer Stützsäule, welche sich durch den Innenraum erstreckt und die Oberschale mit der Unterschale verbindet und gegeneinander abstützt, wobei die mindestens eine Stützsäule vorzugsweise mit einem oberen Ende an der Oberschale und mit einem unteren Ende an der Unterschale angebracht ist. Der Begriff "stützen" bzw. "abstützen" wird im Zusammenhang mit der vorliegenden Erfindung so verstanden, dass nicht nur die Übertragung von Druckkräften, sondern auch die Übertragung von Zugkräften umfasst ist.

Ähnliche Flugzeugstrukturen sind aus dem Stand der Technik bekannt. Insbesondere ist es bekannt, bei Nurflüglern oder ähnlichen Flugzeugen mit sehr breitem Innenraum im Vergleich zu konventionellen Passagierflugzeugen, eine Säulenanordnung in der Mitte des Innenraums vorzusehen, um die Oberschale an der Unterschale abzustützen. Außerdem ist es bei Flugzeugen aller Art bekannt, Klimaluft der Klimaanlage durch entsprechende Rohre, die zwischen einer Rumpfstruktur und einer Kabinenwand verlaufen, von unterhalb der Kabine nach Oberhalb der Kabine zu leiten. Solche Rohre benötigen jedoch relativ viel Platz, Montageaufwand und bringen zusätzliches Gewicht mit, was es im Flugzeugbau alles grundsätzlich zu minimieren gilt. US3405893 beschreibt einen Rumpf für Fluggeräte mit großem Fassungsvermögen und mit einem Mittelträger. EP3378788 und US2012/248244 beschreiben Luftfahrzeugstrukturen mit Trägerelemente zur Luftdurchleitung, die Teil der Rumpfschale sind.

Daher ist es die Aufgabe der vorliegenden Erfindung, eine Flugzeugstruktur bereitzustellen, die besonders effizient ist, insbesondere ein geringes Gewicht hat sowie wenig Platz und Montageaufwand erfordert.

Diese Aufgabe wird dadurch gelöst, dass die Stützsäule, d.h. mindestens eine Stützsäule, vorzugsweise alle Stützsäulen, in ihrem Inneren mindestens einen Strömungskanal zum Durchleiten von Klimaluft einer Klimaanlage aufweist, wobei sich der Strömungskanal vorzugsweise parallel zur Längsrichtung der Stützsäule und mindestens über einen Teil der Länge der Stützsäule zwischen dem oberen und unteren Ende erstreckt. Auf diese Weise wird also der Strömungskanal für Klimaluft in die Stützsäule integriert. Separate Klimarohre zwischen Kabinenwand und Außenhaut sind nicht mehr erforderlich, so dass Platz, Gewicht und Montageaufwand eingespart werden können.

In einer bevorzugten Ausführungsform erstreckt sich die mindestens eine Stützsäule, vorzugsweise alle Stützsäulen der Säulenanordnung, in einer von der Längsachse und der Hochachse aufgespannten Längsmittelebene und/oder wird von der Längsachse geschnitten. Auf diese Weise werden die Oberschale und die Unterschale in einer zentralen und vorzugsweise symmetrischen Position aneinander abgestützt, was besonders effektiv ist.

In einer weiteren bevorzugten Ausführungsform erstreckt sich die mindestens eine Stützsäule, vorzugsweise alle Stützsäulen der Säulenanordnung, parallel zur Hochachse. Auf diese Weise können Kräfte besonders effektiv übertragen werden und der Innenraum wird durch die Stützsäule minimal beeinträchtigt.

In einer weiteren bevorzugten Ausführungsform weist die mindestens eine Stützsäule, vorzugsweise alle Stützsäulen der Säulenanordnung, in ihrem Inneren mindestens zwei Strömungskanäle, vorzugsweise vier Strömungskanäle auf. Vorzugsweise sind dabei jeweils ein Strömungskanal, vorzugsweise jeweils zwei Strömungskanäle für unterschiedliche Klimazonen vorgesehen. Auf diese Weise kann unterschiedliche Klimaluft mit verschiedenen Eigenschaften, wie beispielsweise verschiedenen Temperaturen oder verschiedener Feuchtigkeit, transportiert werden und mehrere Luftverteilerkanäle mit unterschiedlicher Klimaluft versorgt werden.

Dabei ist es besonders bevorzugt, wenn mindestens eine Stützsäule, vorzugsweise alle Stützsäulen der Säulenanordnung, einen runden, insbesondere kreisförmigen, Querschnitt hat. Vorzugsweise sind dabei mindestens zwei, vorzugsweise vier Strömungskanäle in zwei Reihen mit jeweils zwei Strömungskanälen, nebeneinander angeordnet, insbesondere in quadratische Form. Auf diese Weise können die Strömungskanäle in besonders platzeffizienter Weise in der Stützsäule angeordnet werden, wobei die Stützsäule einen minimalen Durchmesser hat.

Alternativ ist es bevorzugt, wenn die mindestens eine Stützsäule, vorzugsweise alle Stützsäulen der Säulenanordnung, einen länglichen, insbesondere ovalen oder rechteckigen, Querschnitt hat. Dabei sind mindestens zwei, vorzugsweise vier Strömungskanäle in einer Reihe nebeneinander angeordnet. Auf diese Weise können die Strömungskanäle in besonders platzeffizienter Weise in der Stützsäule angeordnet werden, wobei die Stützsäule eine minimale Breite hat.

In einer bevorzugten ausführungsform umfasst die mindestens eine Stützsäule, vorzugsweise alle Stützsäulen der Säulenanordnung, eine Stützstruktur zum Abstützen der Oberschale gegenüber der Unterschalen, d.h. zum Übertragen von Lasten, insbesondere Hauptlasten, zwischen der Oberschale und der Unterschale, sowie eine Rohrstruktur, die den mindestens einen Strömungskanal bildet bzw. umgibt. Damit ist die Stützsäule in zwei funktionale Komponenten unterteil, nämlich die Stützstruktur zur Kraftübertragung und der Rohrstruktur zum Bilden des Strömungskanals und damit zum Leiten der Klimaluft.

Dabei ist es besonders bevorzugt, wenn die Rohrstruktur integral mit der Stützstruktur ausgebildet ist, d.h. die Rohrstruktur in die Stützstruktur integriert ist bzw. die Stützstruktur selbst den Strömungskanal bildet. Dabei ist die den Strömungskanal bildende Oberfläche der Stützstruktur bzw. Rohrstruktur besonders glatt und für vorteilhafte Strömungsbedingungen der Klimaluft angepasst. Dies stellt eine besonders einfache und effiziente Bauweise dar, da keine separate Rohrstruktur hergestellt, montiert und gewartet werden muss. Außerdem kann weiteres Gewicht und Platz eingespart werden.

Alternativ ist es bevorzugt, wenn die Rohrstruktur separat von der Stützstruktur ausgebildet ist. Diese Bauweise hat den Vorteil, dass die Rohrstruktur je nach Bedarf ausgetauscht oder angepasst werden kann, ohne die Stützstruktur zu verändern. Außerdem können beispielsweise Standartrohre verwendet werden, so dass die den Strömungskanal bildende Oberfläche der Stützstruktur bzw. Rohrstruktur nicht extra geglättet und für die Durchströmung der Klimaluft bearbeitet oder optimiert werden muss.

Dabei ist es besonders bevorzugt, wenn die Stützstruktur mindestens zwei vorzugsweise durch Material der Stützstruktur voneinander getrennte Kammern aufweist. In jeder Kammer ist mindestens ein Rohr, vorzugsweise zwei Rohre, der Rohrstruktur angeordnet. Vorzugsweise sind die beiden Kammern unterschiedlichen Klimazonen zugeordnet. Die zwei getrennten Kammern stellen dabei eine Wärmeisolierung zwischen den Rohren unterschiedlicher Klimazonen dar.

In einer bevorzugten Ausführungsform ist die mindestens eine Stützsäule, vorzugsweise alle Stützsäulen der Säulenanordnung, dabei insbesondere die Stützstruktur, über diagonale Stützstreben mit der Oberschale verbunden. Dabei sind vorzugsweise vier Stützstreben vorgesehen und derart angeordnet, dass jeweils zwei Stützstreben gegenüber einander angeordnet sind und vorzugsweise die Stützstreben jeweils im Abstand von 90° in Umfangsrichtung um die Stützsäule herum an dieser befestigt sind. Andere Abstände sind jedoch auch möglich. Auf diese Weise wird die Krafteinleitung von der Stützstrebe in die Oberschale auf mehrere Punkte verteilt und die Stützstrebe wird gegen Querkräfte und Biegung abgestützt. Zusätzlich kann eine fünfte Stützstrebe vorgesehen sein, die mittig zwischen den vier diagonalen Stützstreben mit der Oberschale verbunden ist und vor allem Längskräfte zwischen der Stützsäule und der Oberschale überträgt.

In einer bevorzugten Ausführungsform ist die mindestens eine Stützsäule, vorzugsweise alle Stützsäulen der Säulenanordnung, dabei insbesondere mindestens die Stützstruktur, aus Faserverbundwerkstoff gebildet ist, vorzugsweise aus ausgehärteten Prepreg-Lagen oder aus Trockenfaserlagen, die in einem Harzinfusionsprozess mit Harz versehen und ausgehärtet werden. Eine solche Faserverbundbauweise ist besonders leicht und fest. Durch einen Aufbau mit Prepreg- oder Trockenfaser-Lagen können verschiedene Lagen für unterschiedliche Funktionen verwendet werden, beispielsweise zur Trennung zwischen den zwei Kammern, zur Bildung von Anschlusselementen für den Anschluss der Stützstreben oder als lokale Verstärkung.

Ein weiterer Aspekt der vorliegenden Erfindung betrifft ein Flugzeug, vorzugsweise mit einem Innenraum großer Breite, wie beispielsweise einem Nurflügler oder Nurflügler-ähnlichen Flugzeug, umfassend eine Flugzeugstruktur nach einer der zuvor beschriebenen Ausführungsformen. Die zuvor im Zusammenhang mit der Flugzeugstruktur erläuterten Merkmale und Wirkungen sind vis-a-vis anwendbar und bevorzugt im Zusammenhang mit dem Flugzeug.

In einer bevorzugten Ausführungsform umfasst das Flugzeug ferner eine Flugzeugkabine im Innenraum der Flugzeugstruktur, eine Klimaanlage mit einem Luftausgang zur Bereitstellung einer Klimaluft, insbesondere zur Versorgung der Flugzeugkabine, und mindestens ein Luftverteilerkanal, vorzugsweise ein Luftverteilerkanalnetz, das vorzugsweise an oder in der Decke der Flugzeugkabine angeordnet ist, mit Öffnungen zum Kabinenraum zum Verteilen von Klimaluft in der Flugzeugkabine. Der Luftausgang der Klimaanlage ist mit einem Eingang des Strömungskanals, vorzugsweise am unteren Ende der Stützsäule, verbunden. Der Luftverteilerkanal ist mit einem Ausgang des Strömungskanals, vorzugsweise am oberen Ende der Stützsäule, verbunden. Vorzugsweise ist um die mindestens eine Stützsäule, vorzugsweise um alle Stützsäulen der Säulenanordnung, eine Verkleidung vorgesehen, welche die Stützsäule, insbesondere die Stützstruktur und die Stützstreben, umlaufend abdeckt und dabei gegenüber der Flugzeugkabine Wärme- und Schall-isoliert. Mit einer solchen Anordnung kann die Klimaluft von der Klimaanlage durch den Strömungskanal in der Stützsäule nach oben zu dem Luftverteilerkanal geleitet werden und von diesem in der Flugzeugkabine verteilt werden.

Dabei ist es besonders bevorzugt, wenn die Klimaanlage zur Bereitstellung verschiedener Klimaluft unterschiedlicher Klimazonen eingerichtet ist, wobei Klimaanlage einen ersten Luftausgang zur Bereitstellung einer ersten Klimaluft für eine erste Klimazone sowie einen zweiten Luftausgang zur Bereitstellung einer zweiten Klimaluft für eine zweite Klimazone aufweist. Der erste Luftausgang ist mit einem Eingang eines ersten Strömungskanals für die erste Klimazone verbunden und der zweite Luftausgang ist mit einem Eingang eines zweiten Strömungskanals für die zweite Klimazone verbunden. Ein erster Luftverteilerkanal für die erste Klimazone ist mit einem Ausgang des ersten Strömungskanals verbunden und ein zweiter Luftverteilerkanal für die zweite Klimazone ist mit einem Ausgang des zweiten Strömungskanals verbunden. Auf diese Weise können in der Flugzeugkabine zwei unterschiedliche Klimazonen durch die beiden Luftverteilerkanäle realisiert werden, wobei lediglich eine Stützsäule zum Durchleiten der beiden verschiedenen Klimalüfte verwendet wird. Vorzugsweise sind insgesamt vier Klimazonen analog der hier beschriebenen ersten und zweiten Klimazonen vorgesehen.

Im Folgenden werden Ausführungsbeispiele der vorliegenden Erfindung anhand einer Zeichnung näher erläutert. Die Zeichnung zeigt in
- Fig. 1: ein Flugzeug gemäß einer Ausführungsform der Erfindung,
- Fig. 2: eine perspektivische Ansicht des Innenraums des Flugzeugs aus Fig. 1 mit Blick auf die Strömungskanäle und Luftverteilerkanäle zum Leiten und Verteilen der Klimaluft im Innenraum bzw. in der Flugzeugkabine,
- Fig. 3: eine perspektivische Ansicht einer Stützsäule gemäß einer ersten Ausführungsform der Erfindung,
- Fig. 4: eine Draufsicht von unten der Stützsäule aus Fig. 3,
- Fig. 5: eine perspektivische Ansicht einer Stützsäule gemäß einer zweiten Ausführungsform der Erfindung,
- Fig. 6: eine Draufsicht von unten der Stützsäule aus Fig. 5,
- Fig. 7: eine perspektivische Ansicht eines Ausschnitts der Flugzeugstruktur des Flugzeugs aus Fig. 1 mit vier Stützsäulen gemäß der Ausführungsform aus Fig. 5 und
- Fig. 8: die Flugzeugstruktur aus Fig. 7 mit Verkleidungen um die Stützsäulen.

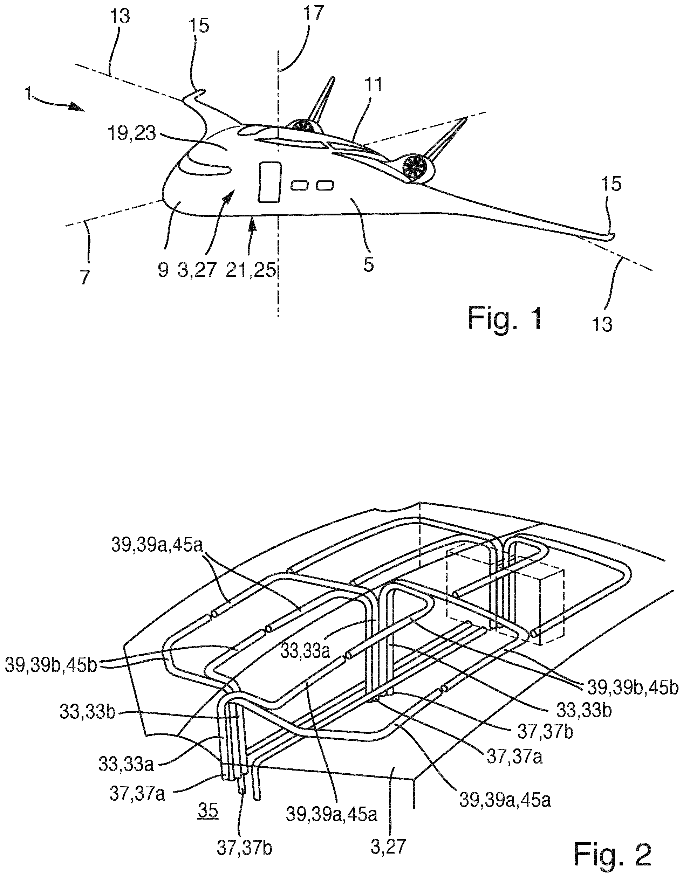

In Fig. 1 ist ein Flugzeug 1 gemäß einem Ausführungsbeispiel der vorliegenden Erfindung dargestellt. Bei dem Flugzeug 1 handelt es sich um ein Nurflügler-ähnliches Flugzeug mit einem Innenraum 3 großer Breite.

Das Flugzeug 1 umfasst eine Flugzeugstruktur 5, die sich entlang bzw. parallel zu einer Längsachse 7 von einer Nase 9 bis zu einem Heck 11, einer Querachse 13 zwischen zwei gegenüberliegenden Flügelspitzen 15, und einer Hochachse 17 zwischen einer Oberseite 19 und einer Unterseite 21 erstreckt. Die Flugzeugstruktur 5 umfasst eine Oberschale 23 im Bereich der Oberseite 19 und eine Unterschale 25 im Bereich der Unterseite 21, die gemeinsam einen Innenraum 3 umgeben, der zur Aufnahme einer Flugzeugkabine 27 ausgebildet ist. Die Flugzeugstruktur 5 umfasst ferner eine Säulenanordnung 29 mit mehreren Stützsäulen 31, welche sich durch den Innenraum 3 erstrecken und die Oberschale 23 mit der Unterschale 25 verbinden und gegeneinander abstützen bzw. aneinander halten. Die Stützsäulen 31 weisen in ihrem Inneren Strömungskanäle 33 zum Durchleiten von Klimaluft einer Klimaanlage 35 auf, die sich parallel zur Längsrichtung der Stützsäulen 31 erstreckt, wie in Fig. 2 gezeigt.

Das Flugzeug 1 umfasst ferner eine Flugzeugkabine 27 im Innenraum 3 der Flugzeugstruktur 5, eine Klimaanlage 35 mit einem Luftausgang 37 zur Bereitstellung einer Klimaluft zur Versorgung der Flugzeugkabine 27 und mehrere Luftverteilerkanäle 39, die an oder in der Decke der Flugzeugkabine angeordnet sind, mit Öffnungen zum Kabinenraum zum Verteilen von Klimaluft in der Flugzeugkabine 27, wie in Fig. 2 dargestellt. Der Luftausgang 37 der Klimaanlage 35 ist mit einem Eingang 39 der Strömungskanäle 33 am unteren Ende der Stützsäulen 31 verbunden. Die Luftverteilerkanäle 39 sind mit Ausgängen 43 der Strömungskanäle 33 am oberen Ende der Stützsäulen 31 verbunden.

Wie ebenfalls in Fig. 2 gezeigt, ist die Klimaanlage 35 zur Bereitstellung verschiedener Klimaluft unterschiedlicher Klimazonen eingerichtet, wobei Klimaanlage 35 einen ersten Luftausgang 37a zur Bereitstellung einer ersten Klimaluft für eine erste Klimazone 45a sowie einen zweiten Luftausgang 37b zur Bereitstellung einer zweiten Klimaluft für eine zweite Klimazone 45b aufweist. Der erste Luftausgang 37a ist mit einem Eingang 41 eines ersten Strömungskanals 33a für die erste Klimazone 45a verbunden und der zweite Luftausgang 37b ist mit einem Eingang 41 eines zweiten Strömungskanals 33b für die zweite Klimazone 45b verbunden. Ein erster Luftverteilerkanal 39a für die erste Klimazone 45a ist mit einem Ausgang 43 des ersten Strömungskanals 33a verbunden und ein zweiter Luftverteilerkanal 39a für die zweite Klimazone 45b ist mit einem Ausgang 43 des zweiten Strömungskanals 33b verbunden. In dem vorliegenden Ausführungsbeispiel aus Fig. 2 sind neben der ersten und zweiten Klimazone noch eine dritte und eine vierte Klimazone vorgesehen, die analog der ersten und zweiten Klimazonen ausgebildet sind.

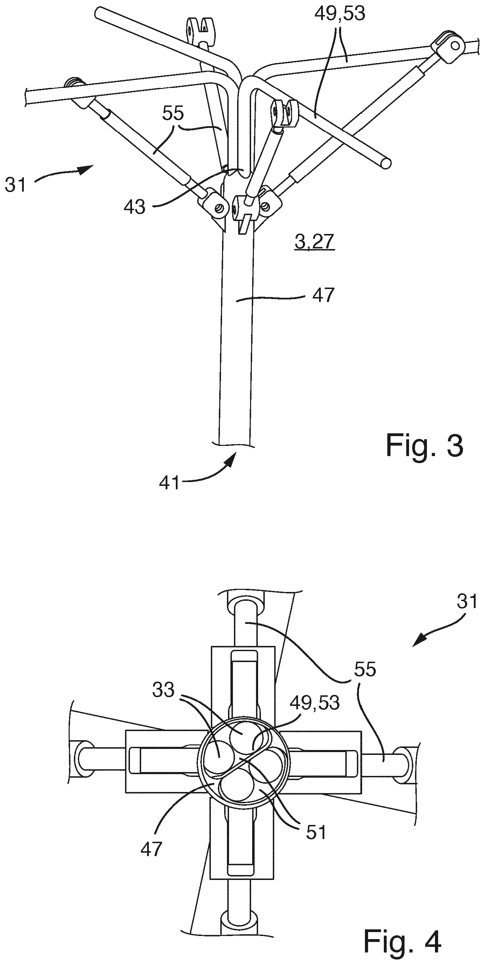

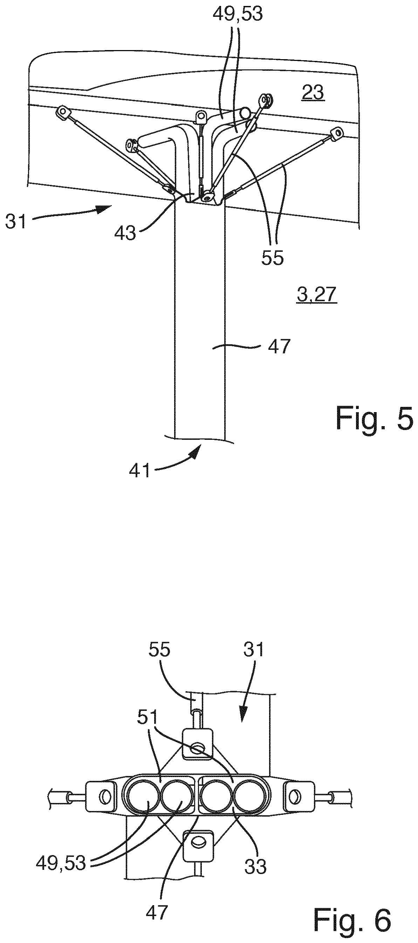

Wie in Fig. 3 bis 6 erkennbar, weisen die Stützsäulen 31 in ihrem Inneren vier Strömungskanäle 33 auf. Dabei sind jeweils zwei Strömungskanäle 33 für unterschiedliche Klimazonen vorgesehen. In der in Fig. 3 und 4 gezeigten Ausführungsform haben die Stützsäulen 31 einen kreisförmigen Querschnitt. Dabei sind vier Strömungskanäle 33 in zwei Reihen mit jeweils zwei Strömungskanälen 33 in quadratische Form nebeneinander angeordnet. In der in Fig. 5 und 6 gezeigten alternativen Ausführungsform haben die Stützsäulen 31 einen länglichen, ovalen Querschnitt. Dabei sind vier Strömungskanäle 33 in einer Reihe nebeneinander angeordnet. Alternativ ist es jedoch auch möglich, dass nur zwei Strömungskanäle 33 nebeneinander angeordnet sind.

Die Stützsäulen 31 umfassen eine Stützstruktur 47 zum Abstützen der Oberschale 23 gegenüber der Unterschale 25 sowie eine Rohrstruktur 49, die den mindestens einen Strömungskanal 33 bildet. In den in Fig. 3 bis 6 gezeigten Ausführungsbeispielen ist die Rohrstruktur 49 separat von der Stützstruktur 47 ausgebildet, wobei die einzelnen Rohre der Rohrstruktur 49 in entsprechende Öffnungen der Stützstruktur 47 aufgenommen sind. Die Stützstruktur 47 ist aus Faserverbundwerkstoff gebildet, insbesondere aus ausgehärteten Prepreg-Lagen.

Die Stützstruktur 47 weist zwei durch Material der Stützstruktur 47 voneinander getrennte Kammern 51 auf, wie in Fig. 3 bis 6 erkennbar. In jeder Kammer 51 sind zwei Rohre 53 der Rohrstruktur 49 angeordnet. Beide Kammern 51 sind unterschiedlichen Klimazonen zugeordnet. In den in Fig. 3 bis 6 gezeigten Ausführungsbeispielen ist es ebenso möglich und bevorzugt, dass - zumindest über einen Teil der Länge der Stützsäulen 31 die beiden Kammern 51 die Strömungskanäle 33 bilden und die Rohre 53 erst im Anschluss an die Kammern angeschlossen sind, wobei der sich durch die Kammern 51 erstreckende Teil der Rohre 53 also eingespart werden könnte.

Wie in Fig. 3, 5 und 7 dargestellt, ist die Stützstruktur 47 über diagonale Stützstreben 55 mit der Oberschale 23 verbunden. Dabei sind vier Stützstreben 55 vorgesehen und derart angeordnet, dass jeweils zwei Stützstreben 55 gegenüber einander angeordnet sind und die Stützstreben 55 jeweils im Abstand von 90° in Umfangsrichtung um die Stützsäule 31 herum an dieser befestigt sind. In Fig. 5 ist zusätzlich eine zentrale Stützstrebe 55 dargestellt, die die Stützstruktur 47 mittig zwischen den diagonalen Stützstreben 55 mit der Oberschale 23 verbindet.

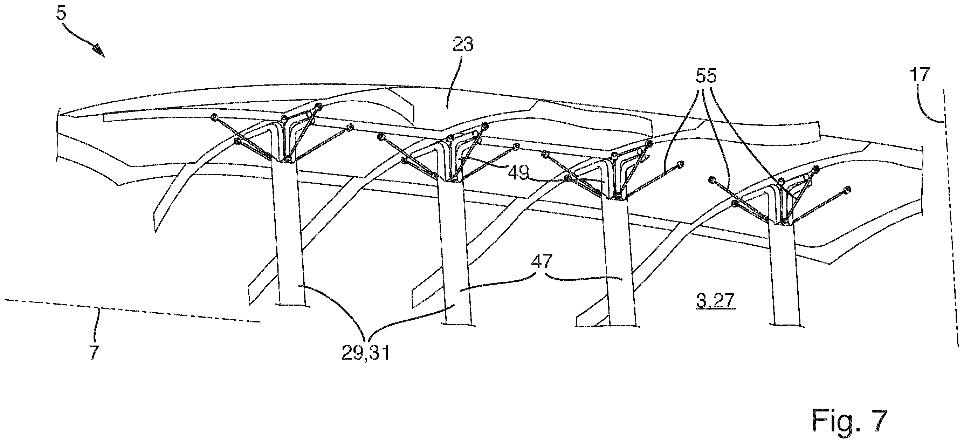

In Fig. 7 ist eine Säulenanordnung 29 mit vier in einer Reihe angeordneten Stützsäulen 31 der in Fig. 5 und 6 gezeigten Ausführungsform dargestellt. Die Stützsäulen 31 erstrecken sich in einer von der Längsachse 7 und der Hochachse 17 aufgespannten Längsmittelebene. Ferner erstrecken sich die Stützsäulen 31 parallel zur Hochachse 17.

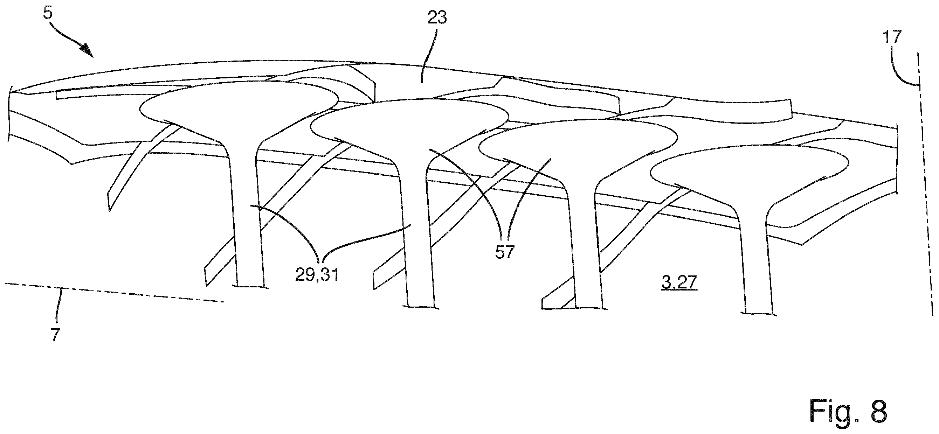

In Fig. 8 sind die in Fig 7 gezeigten Stützsäulen 31 mit einer Verkleidung 57 dargestellt, welche die Stützstruktur 47 und die Stützstreben 55 umlaufend abdeckt und gegenüber der Flugzeugkabine 27 Wärme- und Schall-isoliert.

Mit der oben beschriebenen Erfindung wird der zum Leiten von Klimaluft vorgesehene Strömungskanal 33 in die Stützsäule 31 integriert. Separate Klimarohre zwischen Kabinenwand und Außenhaut sind nicht mehr erforderlich, so dass Platz, Gewicht und Montageaufwand eingespart werden können.

## Patentansprüche

1. Flugzeugstruktur (5), die sich entlang einer Längsachse (7), einer Querachse (13) und einer Hochachse (17) erstreckt, wobei die Flugzeugstruktur (5) umfasst
eine Oberschale (23) und eine Unterschale (25), die gemeinsam einen Innenraum (3) umgeben, der zur Aufnahme einer Flugzeugkabine (27) ausgebildet ist,
eine Säulenanordnung (29) mit mindestens einer Stützsäule (31), welche sich durch den Innenraum (3) erstreckt und die Oberschale (23) mit der Unterschale (25) verbindet und gegeneinander abstützt,
**dadurch gekennzeichnet, dass**
die Stützsäule (31) in ihrem Inneren mindestens einen Strömungskanal (33) zum Durchleiten von Klimaluft aufweist.

2. Flugzeugstruktur nach Anspruch 1, wobei sich die Stützsäule (31) in einer von der Längsachse (7) und der Hochachse (17) aufgespannten Längsmittelebene erstreckt.

3. Flugzeugstruktur nach Anspruch 1 oder 2, wobei sich die Stützsäule (31) parallel zur Hochachse (17) erstreckt.

4. Flugzeugstruktur nach einem der Ansprüche 1 bis 3, wobei die Stützsäule (31) in ihrem Inneren mindestens zwei Strömungskanäle (33), vorzugsweise vier Strömungskanäle (33) aufweist.

5. Flugzeugstruktur nach Anspruch 4, wobei die Stützsäule (31) einen runden Querschnitt hat und
wobei mindestens zwei, vorzugsweise vier Strömungskanäle (33) in zwei Reihen mit jeweils zwei Strömungskanälen (33), nebeneinander angeordnet sind.

6. Flugzeugstruktur nach Anspruch 4, wobei die Stützsäule (31) einen länglichen Querschnitt hat und
wobei mindestens zwei, vorzugsweise vier Strömungskanäle (33) in einer Reihe nebeneinander angeordnet sind.

7. Flugzeugstruktur nach einem der Ansprüche 1 bis 6, wobei die Stützsäule (31) eine Stützstruktur (47) zum Abstützen der Oberschale (23) gegenüber der Unterschale (25) sowie eine Rohrstruktur (49) umfasst, die den mindestens einen Strömungskanal (33) bildet.

8. Flugzeugstruktur nach Anspruch 7, wobei die Rohrstruktur (49) integral mit der Stützstruktur (47) ausgebildet ist.

9. Flugzeugstruktur nach Anspruch 7, wobei die Rohrstruktur (49) separat von der Stützstruktur (47) ausgebildet ist.

10. Flugzeugstruktur nach Anspruch 9, wobei die Stützstruktur (47) mindestens zwei getrennte Kammern (51) aufweist und
wobei in jeder Kammer (51) mindestens ein Rohr (53), vorzugsweise zwei Rohre (53), der Rohrstruktur (49) angeordnet ist.

11. Flugzeugstruktur nach einem der Ansprüche 1 bis 10, wobei die Stützsäule (31) über diagonale Stützstreben (55) mit der Oberschale (23) verbunden ist,
wobei vier Stützstreben (55) vorgesehen sind und derart angeordnet sind, dass jeweils zwei Stützstreben (55) gegenüber einander angeordnet sind.

12. Flugzeugstruktur nach einem der Ansprüche 1 bis 11, wobei die Stützsäule (31) aus Faserverbundwerkstoff gebildet ist.

13. Flugzeug (1) umfassend eine Flugzeugstruktur (5) nach einem der Ansprüche 1 bis 12.

14. Flugzeug nach Anspruch 13, ferner umfassend
eine Flugzeugkabine (27) im Innenraum (3) der Flugzeugstruktur (5),
eine Klimaanlage (35) mit einem Luftausgang (37) zur Bereitstellung einer Klimaluft und
mindestens ein Luftverteilerkanal (39) an oder in der Decke der Flugzeugkabine (27) zum Verteilen von Klimaluft in der Flugzeugkabine (27),
wobei der Luftausgang (37) der Klimaanlage (35) mit einem Eingang (41) des Strömungskanals (33) verbunden ist und
wobei der Luftverteilerkanal (39) mit einem Ausgang (43) des Strömungskanals (33) verbunden ist.

15. Flugzeug nach Anspruch 14, wobei die Klimaanlage (35) zur Bereitstellung verschiedener Klimaluft unterschiedlicher Klimazonen eingerichtet ist,
wobei die Klimaanlage einen ersten Luftausgang (37a) zur Bereitstellung einer ersten Klimaluft für eine erste Klimazone (45a) sowie einen zweiten Luftausgang (37b) zur Bereitstellung einer zweiten Klimaluft für eine zweite Klimazone (45b) aufweist,
wobei der erste Luftausgang (37a) mit einem Eingang (41) eines ersten Strömungskanals (33a) für die erste Klimazone (45a) verbunden ist,
wobei der zweite Luftausgang (37b) mit einem Eingang (41) eines zweiten Strömungskanals (33b) für die zweite Klimazone (45b) verbunden ist,
wobei ein erster Luftverteilerkanal (39a) für die erste Klimazone (45a) mit einem Ausgang (43) des ersten Strömungskanals (33a) verbunden ist und
wobei ein zweiter Luftverteilerkanal (39b) für die zweite Klimazone (45b) mit einem Ausgang (43) des zweiten Strömungskanals (33b) verbunden ist.

## Claims

1. Aircraft structure (5), which extends along a longitudinal axis (7), a transverse axis (13) and a vertical axis (17), wherein the aircraft structure (5) comprises
an upper shell (23) and a lower shell (25), which together surround an interior space (3) that is designed to accommodate an aircraft cabin (27),
a pillar arrangement (29) having at least one support pillar (31), which extends through the interior space (3) and connects the upper shell (23) to the lower shell (25) and supports said shells in relation to one another, **characterized in that**
the interior of the support pillar (31) has at least one flow duct (33) for the passage of air-conditioned air.

2. Aircraft structure according to Claim 1, wherein the support pillar (31) extends in a longitudinal median plane defined by the longitudinal axis (7) and the vertical axis (17).

3. Aircraft structure according to Claim 1 or 2, wherein the support pillar (31) extends parallel to the vertical axis (17).

4. Aircraft structure according to one of Claims 1 to 3, wherein the interior of the support pillar (31) has at least two flow ducts (33), preferably four flow ducts (33) .

5. Aircraft structure according to Claim 4, wherein the support pillar (31) has a round cross section, and wherein at least two flow ducts (33), preferably four in two rows each having two flow ducts (33), are arranged next to one another.

6. Aircraft structure according to Claim 4, wherein the support pillar (31) has an elongate cross section, and wherein at least two, preferably four, flow ducts (33) are arranged in a row next to one another.

7. Aircraft structure according to one of Claims 1 to 6, wherein the support pillar (31) comprises a support structure (47) for supporting the upper shell (23) in relation to the lower shell (25), and a pipe structure (49), which forms the at least one flow duct (33).

8. Aircraft structure according to Claim 7, wherein the pipe structure (49) is formed integrally with the support structure (47).

9. Aircraft structure according to Claim 7, wherein the pipe structure (49) is formed separately from the support structure (47).

10. Aircraft structure according to Claim 9, wherein the support structure (47) has at least two separate chambers (51), and
wherein at least one pipe (53), preferably two pipes (53), of the pipe structure (49) is/are arranged in each chamber (51).

11. Aircraft structure according to one of Claims 1 to 10, wherein the support pillar (31) is connected to the upper shell (23) by way of diagonal support struts (55), wherein four support struts (55) are provided and are arranged in such a manner that in each case two support struts (55) are arranged opposite one another.

12. Aircraft structure according to one of Claims 1 to 11, wherein the support pillar (31) is formed from fibre-composite material.

13. Aircraft (1) comprising an aircraft structure (5) according to one of Claims 1 to 12.

14. Aircraft according to Claim 13, further comprising an aircraft cabin (27) in the interior space (3) of the aircraft structure (5),
an air-conditioning system (35) having an air outlet (37) for providing air-conditioned air, and
at least one air-distributing duct (39) on or in the ceiling of the aircraft cabin (27) for distributing air-conditioned air in the aircraft cabin (27),
wherein the air outlet (37) of the air-conditioning system (35) is connected to an inlet (41) of the flow duct (33), and
wherein the air-distributing duct (39) is connected to an outlet (43) of the flow duct (33).

15. Aircraft according to Claim 14, wherein the air-conditioning system (35) is configured to provide different types of air-conditioned air to different air-conditioning zones,
wherein the air-conditioning system has a first air outlet (37a) for providing first air-conditioned air for a first air-conditioning zone (45a) and a second air outlet (37b) for providing second air-conditioned air for a second air-conditioning zone (45b),
wherein the first air outlet (37a) is connected to an inlet (41) of a first flow duct (33a) for the first air-conditioning zone (45a),
wherein the second air outlet (37b) is connected to an inlet (41) of a second flow duct (33b) for the second air-conditioning zone (45b),
wherein a first air-distributing duct (39a) for the first air-conditioning zone (45a) is connected to an outlet (43) of the first flow duct (33a), and
wherein a second air-distributing duct (39b) for the second air-conditioning zone (45b) is connected to an outlet (43) of the second flow duct (33b).

## Revendications

1. Structure d'aéronef (5) s'étendant le long d'un axe longitudinal (7), d'un axe transversal (13) et d'un axe vertical (17), la structure d'aéronef (5) comprenant une coque supérieure (23) et une coque inférieure (25) qui entourent ensemble un espace intérieur (3) configuré pour recevoir une cabine d'aéronef (27),
un agencement de colonne (29) avec au moins une colonne de support (31) s'étendant à travers l'espace intérieur (3) et reliant la coque supérieure (23) à la coque inférieure (25) et les supportant l'une contre l'autre, **caractérisée en ce que**
la colonne de support (31) présente en son intérieur au moins un canal d'écoulement (33) pour le passage de l'air de climatisation.

2. Structure d'aéronef selon la revendication 1, dans laquelle la colonne de support (31) s'étend dans un plan médian longitudinal défini par l'axe longitudinal (7) et l'axe vertical (17).

3. Structure d'aéronef selon la revendication 1 ou 2, dans laquelle la colonne de support (31) s'étend parallèlement à l'axe vertical (17).

4. Structure d'aéronef selon l'une quelconque des revendications 1 à 3, dans laquelle la colonne de support (31) présente en son intérieur au moins deux canaux d'écoulement (33), de préférence quatre canaux d'écoulement (33).

5. Structure d'aéronef selon la revendication 4, dans laquelle la colonne de support (31) a une section transversale circulaire et
dans laquelle au moins deux, de préférence quatre, canaux d'écoulement (33) sont agencés côte à côte en deux rangées de deux canaux d'écoulement (33) chacune.

6. Structure d'aéronef selon la revendication 4, dans laquelle la colonne de support (31) a une section transversale allongée et
dans laquelle au moins deux, de préférence quatre, canaux d'écoulement (33) sont agencés côte à côte dans une rangée.

7. Structure d'aéronef selon l'une quelconque des revendications 1 à 6, dans laquelle la colonne de support (31) comprend une structure de support (47) pour supporter la coque supérieure (23) par rapport à la coque inférieure (25) ainsi qu'une structure tubulaire (49) formant l'au moins un canal d'écoulement (33).

8. Structure d'aéronef selon la revendication 7, dans laquelle la structure tubulaire (49) est configurée d'un seul tenant avec la structure de support (47).

9. Structure d'aéronef selon la revendication 7, dans laquelle la structure tubulaire (49) est réalisée séparément de la structure de support (47).

10. Structure d'aéronef selon la revendication 9, dans laquelle la structure de support (47) présente au moins deux chambres séparées (51) et
dans laquelle au moins un tube (53), de préférence deux tubes (53), de la structure tubulaire (49) est agencé dans chaque chambre (51).

11. Structure d'aéronef selon l'une quelconque des revendications 1 à 10, dans laquelle la colonne de support (31) est reliée à la coque supérieure (23) par le biais d'entretoises de support diagonales (55),
dans laquelle quatre entretoises de support (55) sont prévues et sont agencées de telle sorte que deux entretoises de support (55) sont respectivement agencées l'une en face de l'autre.

12. Structure d'aéronef selon l'une quelconque des revendications 1 à 11, dans laquelle la colonne de support (31) est formée d'un matériau composite fibreux.

13. Aéronef (1) comprenant une structure d'aéronef (5) selon l'une quelconque des revendications 1 à 12.

14. Aéronef selon la revendication 13, comprenant en outre
une cabine d'aéronef (27) dans l'espace intérieur (3) de la structure d'aéronef (5),
une installation de climatisation (35) avec une sortie d'air (37) pour fournir un air de climatisation et
au moins un canal de distribution d'air (39) sur ou dans le plafond de la cabine d'aéronef (27) pour distribuer l'air de climatisation dans la cabine d'aéronef (27), dans lequel la sortie d'air (37) de l'installation de climatisation (35) est reliée à une entrée (41) du canal d'écoulement (33) et
dans lequel le canal de distribution d'air (39) est relié à une sortie (43) du canal d'écoulement (33).

15. Aéronef selon la revendication 14, dans lequel l'installation de climatisation (35) est adaptée pour fournir différents airs de climatisation de différentes zones climatiques,
dans lequel l'installation de climatisation présente une première sortie d'air (37a) pour fournir un premier air de climatisation pour une première zone de climatisation (45a) et une deuxième sortie d'air (37b) pour fournir un deuxième air de climatisation pour une deuxième zone de climatisation (45b),
dans lequel la première sortie d'air (37a) est reliée à une entrée (41) d'un premier canal d'écoulement (33a) pour la première zone climatique (45a),
dans lequel la deuxième sortie d'air (37b) est reliée à une entrée (41) d'un deuxième canal d'écoulement (33b) pour la deuxième zone climatique (45b),
dans lequel un premier canal de distribution d'air (39a) pour la première zone climatique (45a) est relié à une sortie (43) du premier canal d'écoulement (33a), et dans lequel un deuxième canal de distribution d'air (39b) pour la deuxième zone climatique (45b) est relié à une sortie (43) du deuxième canal d'écoulement (33b).
